# EUROPEAN PATENT APPLICATION

(11) **EP 1 947 635 A1**
(43) Date of publication of application: **23.07.2008**
(21) Application number: 06797726.4
(22) Date of filing: 08.09.2006
(51) Int. Cl.: G09G 5/00, G06F 1/32, G09G 5/12, G09G 5/18, H04N 5/66

(54) **DISPLAY CONTROL DEVICE**

(30) Priority: 14.10.2005 JP 2005301020
(71) Applicant: MATSUSHITA ELECTRIC INDUSTRIAL CO., LTD., Osaka 571-8501 (JP)
(72) Inventor: ONISHI, Kokoro c/o Matsushita Electric Industrial Co., Ltd., Chuo-ku Osaka-shi Osaka 540-6207 (JP); SUZUKI, Akihiro c/o Matsushita Electric Industrial Co., Ltd., Chuo-ku Osaka-shi Osaka 540-6207 (JP)
(74) Representative: Pautex Schneider, Nicole Véronique
(86) International application number: PCT/JP2006/317900
(87) International publication number: WO 2007/043264

(57) **Abstract**

A display control device equipped with a controller (101) is provided with a state determination unit (214) for judging the power supply management state of a display on the basis of a combination of presence/absence of a horizontal sync signal (204) and a vertical sync signal (208), whereby the four states of "On", "Stand-By", "Suspend", and "Off" are judged in accordance with presence/absence of the horizontal sync signal (204) and the vertical sync signal (208) without using the controller (101). When there is a state change, an interruption signal is generated to control the controller (101), thereby to perform display power supply management without reducing the performance of the controller. Further, since the controller is also controlled, a further reduction in power consumption is achieved as the whole display set.

## Description

### TECHNICAL FIELD

The present invention relates to a display control device, and more particularly, to a display control device which controls power supply management for a display.

### BACKGROUND ART

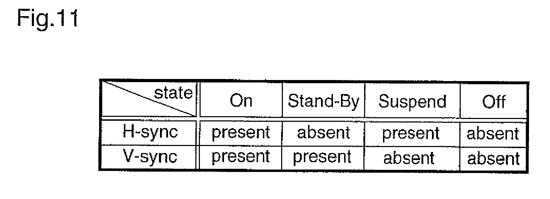

There is DPM (Display Power Management) as a standard specification established by VESA (Video Electronics Standards Association) which is an industry standards body relating to computer displays in the United States. The DPM is a standard for bringing a display into a power-saving mode when a computer is not operated for a while, and specifically, the DPM defines four states of "On", "Stand-by", "Suspend", and "Off" in accordance with a combination of presence/absence of a vertical sync signal (V-sync) and a horizontal sync signal (H-sync) as shown in figure 11. As constructions that realize the DPM, there have conventionally been a construction for judging the four states by a software processing using a microcomputer equipped with such as timers to perform display power supply management (for example, refer to Patent Document 1) or a construction for judging the four states with a circuit implemented by an ASIC without using a microcomputer to perform display power supply management (for example, refer to Patent Document 2).
Patent document 1: Specification of US Patent No.5586333
Patent Document 2: Specification of Japanese Patent No.3153102

### DISCLOSURE OF THE INVENTION

### PROBLEMS TO BE SOLVED BY THE INVENTION

In the construction for judging the four states by a software processing using a microcomputer equipped with such as timers, however, since most processes are implemented by software processings using a controller, the controller is heavily loaded, and thereby the performance of the controller is degraded. Further, even when a special microcomputer is employed, the microcomputer causes an increase in cost. In addition, since the controller is used for judgment of the states, the controller is operated even while the display is in the low power compensation state, and the display set including the microcomputer is not in the low power consumption state.

Further, in the construction for judging the four states with a circuit implemented by an ASIC without using a microcomputer to perform display power supply management, since no microcomputer is employed, display power supply management can be carried out without having the above-mentioned problem of degradation in the performance of the controller. However, the microcomputer for control is necessarily mounted on the display set, and a special ASIC for generating control signals must be added in order to perform a control for suppressing power consumption (hereinafter referred to as low-power-consumption mode) also in the control microcomputer according to the state, and further, a plurality of special terminals that enable mode identification for the control signals applied to the control microcomputer must be assigned to the microcomputer. Furthermore, in the ASIC circuit construction proposed by Patent Document 2, since the state judgment is performed every time a sync pulse is input, the noise characteristics are degraded.

The present invention is made to solve the above-described problems and has for its object to provide a display control device which can perform display power supply management without degrading performance of a controller, thereby realizing low power consumption as a whole display set.

### MEASURES TO SOLVE THE PROBLEMS

According to the present invention, in a display control device equipped with a controller, four states of "On", "Stand-by", "Suspend", and "Off" are judged without using the controller, and an interruption signal is generated when the state has changed to perform control for the controller. Further, in a circuit for judging the state of the display control device, the number of pulses of a horizontal sync signal or a vertical sync signal is counted for a predetermined period of time to judge the frequency, thereby improving the noise characteristics.

According to Claim 1 of the present invention, there is provided a display control device having a controller, and a power supply management state judgment unit for judging a power supply management state of a display on the basis of a combination of presence/absence of a horizontal sync signal and a vertical sync signal, wherein the power supply of the display is managed in accordance with a result of the judgment by the power supply management state judgment unit, and the controller is operated when it is judged that the power supply management state of the display has changed.

According to Claim 2 of the present invention, the display control device defined in Claim 1 further includes a communication unit for performing communication between devices.

According to Claim 3 of the present invention, the display control device defined in Claim 1 further includes a character display unit for displaying characters on the display.

According to Claim 4 of the present invention, there is provided a display control device comprising a storage unit in which a judgment result of a power supply management state of a display is stored, a controller for controlling input/output of data between the storage unit and the controller, a horizontal sync signal input unit to which an external horizontal sync signal is input, a vertical sync signal input unit to which an external vertical sync signal is input, a horizontal sync signal frequency detection unit for detecting a frequency of the horizontal sync signal, a vertical sync signal frequency detection unit for detecting a frequency of the vertical sync signal, a horizontal sync signal presence/absence judgment unit for detecting presence/absence of the horizontal sync signal on the basis of a reference value for judging presence/absence of the horizontal sync signal, a vertical sync signal presence/absence judgment unit for detecting presence/absence of the vertical sync signal on the basis of a reference value for judging presence/absence of the vertical sync signal, a power supply management state judgment unit for judging the power supply management state of the display on the basis of a combination of presence/absence of the horizontal sync signal and the vertical sync signal, and an interruption generation unit for generating an interruption signal to be output to the controller, when the power supply management judgment unit judges that the power supply management state of the display is changed, wherein the power supply of the display is managed according to the result of the judgment by the power supply management state judgment unit, and the controller is operated on the basis of the interruption signal.

According to Claim 5 of the present invention, the display control device defined in Claim 4 further includes a communication unit for performing communication between devices.

According to Claim 6 of the present invention, the display control device defined in Claim 4 further includes a character display unit for displaying characters on the display.

According to Claim 7 of the present invention, there is provided a display control device comprising a storage unit in which a judgment result of a power supply management state of a display is stored, a controller for controlling input/output of data between the storage unit and the controller, a horizontal sync signal input unit to which an external horizontal sync signal is input, a vertical sync signal input unit to which an external vertical sync signal is input, a horizontal sync signal pulse generation unit for generating a pulse of the horizontal sync signal, a vertical sync signal pulse generation unit for generating a pulse of the vertical sync signal, a reference frequency signal generation unit for generating a reference frequency signal to be a reference of frequency detection for the horizontal sync signal and the vertical sync signal, a horizontal sync signal frequency detection unit for detecting a frequency of the horizontal sync signal, a vertical sync signal frequency detection unit for detecting a frequency of the vertical sync signal, a horizontal sync signal presence/absence judgment unit for detecting presence/absence of the horizontal sync signal on the basis of a reference value for judging presence/absence of the horizontal sync signal, a vertical sync signal presence/absence judgment unit for detecting presence/absence of the vertical sync signal on the basis of a reference value for judging presence/absence of the vertical sync signal, a power supply management state judgment unit for judging the power supply management state of the display on the basis of a combination of presence/absence of the horizontal sync signal and the vertical sync signal, and an interruption generation unit for generating an interruption signal to be output to the controller when the power supply management judgment unit judges that the display power supply management state has changed, wherein the power supply of the display is managed according to the result of the judgment by the power supply management state judgment unit, and the controller is operated on the basis of the interruption signal.

According to Claim 8 of the present invention, the display control device defined in Claim 7 further includes a communication unit for performing communication between devices.

According to Claim 9 of the present invention, the display control device defined in Claim 7 further includes a character display unit for displaying characters on the display.

According to Claim 10 of the present invention, there is provided a display control device comprising a storage unit in which a judgment result of a power supply management state of a display is stored, a controller for controlling input/output of data between the storage unit and the controller, a horizontal sync signal input unit to which an external horizontal sync signal is input, a vertical sync signal input unit to which an external vertical sync signal is input, a horizontal sync signal noise filter for removing noise in the horizontal sync signal, a vertical sync signal noise filter for removing noise in the vertical sync signal, a horizontal sync signal pulse generation unit for generating a pulse of the horizontal sync signal, a vertical sync signal pulse generation unit for generating a pulse of the vertical sync signal, a reference frequency signal generation unit for generating a reference frequency signal to be a reference of frequency detection for the horizontal sync signal and the vertical sync signal, a horizontal sync signal frequency detection unit for detecting a frequency of the horizontal sync signal, a vertical sync signal frequency detection unit for detecting a frequency of the vertical sync signal, a horizontal sync signal presence/absence judgment unit for detecting presence/absence of the horizontal sync signal on the basis of a reference value for judging presence/absence of the horizontal sync signal, a vertical sync signal presence/absence judgment unit for detecting presence/absence of the vertical sync signal on the basis of a reference value for judging presence/absence of the vertical sync signal, a power supply management state judgment unit for judging the power supply management state of the display on the basis of a combination of presence/absence of the horizontal sync signal and the vertical sync signal, and an interruption generation unit for generating an interruption signal to be output to the controller when the power supply management judgment unit judges that the display power supply management state has changed, wherein the power supply of the display is managed according to the result of the judgment by the power supply management state judgment unit, and the controller is operated on the basis of the interruption signal.

According to Claim 11 of the present invention, the display control device defined in Claim 10 further includes a communication unit for performing communication between devices.

According to Claim 12 of the present invention, the display control device defined in Claim 10 further includes a character display unit for displaying characters on the display.

According to Claim 13 of the present invention, in the display control device defined in Claim 4, the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

According to Claim 14 of the present invention, the display control device defined in Claim 13 further includes a communication unit for performing communication between devices.

According to Claim 15 of the present invention, the display control device defined in Claim 13 further includes a character display unit for displaying characters on the display.

According to Claim 16 of the present invention, in the display control device defined in Claim 7, the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

According to Claim 17 of the present invention, the display control device defined in Claim 16 further includes a communication unit for performing communication between devices.

According to Claim 18 of the present invention, the display control device defined in Claim 16 further includes a character display unit for displaying characters on the display.

According to Claim 19 of the present invention, in the display control device defined in Claim 10, the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

According to Claim 20 of the present invention, the display control device defined in Claim 19 further includes a communication unit for performing communication between devices.

According to Claim 21 of the present invention, the display control device defined in Claim 19 further includes a character display unit for displaying characters on the display.

According to Claim 22 of the present invention, the display control device defined in any of Claims 1, 4, 7, 10, 13, 16 and 19 further includes a communication unit for performing communication between devices, and a character display unit for displaying characters on the display.

### EFFECT OF THE INVENTION

According to the present invention, since the display control device is operated independently of the controller until the state is determined, the load to the controller is reduced, and thereby degradation in the controller performance can be reduced. Further, since the circuit for determining the state is incorporated in the control microcomputer, display power supply management can be performed, and further, the operation mode of the controller can be easily changed according to the state with an interruption signal that is generated when the state has changed, thereby realizing further reduction in power consumption as the whole display set. Furthermore, these effects can be achieved without adding control terminals.

### BRIEF DESCRIPTION OF THE DRAWINGS

Figure 1 is a block diagram illustrating the construction of a display control device according to a first embodiment of the present invention.
Figure 2 is a timing chart relating to a horizontal sync signal in the display control device according to the first embodiment of the present invention.
Figure 3 is a timing chart relating to a vertical sync signal in the display control device according to the first embodiment of the present invention.
Figure 4 is a flowchart for explaining interruption generation in the display control device according to the first embodiment of the present invention.
Figure 5 is a block diagram illustrating the construction of a display control device according to a second embodiment of the present invention.
Figure 6 is a block diagram illustrating the construction of a display control device according to a third embodiment of the present invention.
Figure 7 is a block diagram illustrating the construction of a display control device according to a fourth embodiment of the present invention.
Figure 8 is a diagram for explaining a vertical/horizontal sync signal presence/absence judgment method according to the fourth embodiment of the present invention.
Figure 9 is a block diagram illustrating the construction of a display control device according to a fifth embodiment of the present invention.
Figure 10 is a simplified schematic diagram of a display set including the display control device of the present invention.
Figure 11 is a list of states based on the DPM standard.

### DESCRIPTION OF REFERENCE NUMERALS

1 ... personal computer body
2 ... display control device
3 ... video signal processing LSI
4 ... panel drive control LSI
5 ... display panel
6 ... display set
7 ... horizontal sync signal (H-sync), vertical sync signal (V-sync)
8 ... video signal
9 ... state signal
10 ... OSD display information
11 ... video display signal
12 ... image display information
101 ... controller
102 ... storage unit
103 ... horizontal sync signal input part
104 ... vertical sync signal input part
105 ... horizontal sync signal pulse generation unit
106 ... vertical sync signal pulse generation unit
107 ... reference frequency signal generation unit
108 ... horizontal sync signal frequency detection unit
109 ... vertical sync signal frequency detection unit
110 ... horizontal sync signal presence/absence judgment unit
111 ... vertical sync signal presence/absence judgment unit
112 ... state determination unit
113 ... interruption generation unit
114 ... state judgment block
201 ... reference frequency signal
202 ... horizontal sync signal frequency comparison value
203 ... vertical sync signal frequency comparison value
204 ... horizontal sync signal
205 ... horizontal sync signal pulse
206 ... frequency of horizontal sync signal
207 ... internal counter of horizontal sync signal frequency detection unit
208 ... vertical sync signal
209 ... vertical sync signal pulse
210 ... frequency of vertical sync signal
211 ... internal counter of vertical sync signal frequency detection unit
212 ... horizontal sync signal presence/absence judgment result
213 ... vertical sync signal presence/absence judgment result
214 ... state
215 ... interruption signal
216 ... state readout data
217 ... state transition signal
218 ... horizontal/vertical sync signal frequency comparison . value write data
219 ... horizontal/vertical sync signal frequency higher-order/lower-order comparison value write data
220 ... OSD control signal
221 ... serial port control signal
501 ... horizontal sync signal noise filter
502 ... vertical sync signal noise filter
503 ... noise-removed horizontal sync signal
504 ... noise-removed vertical sync signal
601 ... serial port
701 ... horizontal sync signal frequency higher-order comparison value
702 ... horizontal sync signal frequency lower-order comparison value
703 ... vertical sync signal frequency higher-order comparison value
704 ... vertical sync signal frequency lower-order comparison value
901 ... OSD circuit

### BEST MODE TO EXECUTE THE INVENTION

Hereinafter, the best mode to execute the invention will be described with reference to the drawings.

### (Embodiment 1)

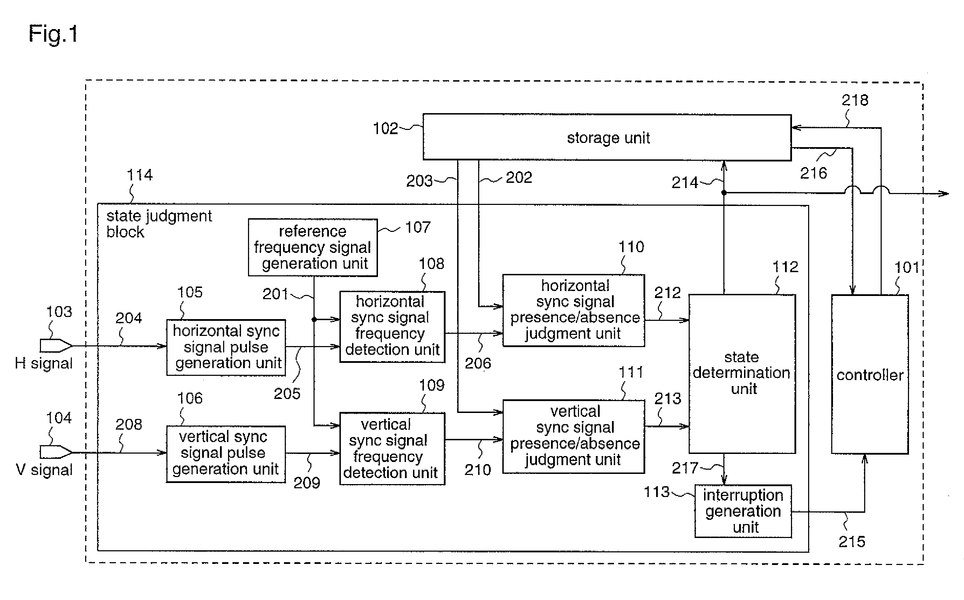

Figure 1 is a block diagram illustrating the construction of a display control device according to a first embodiment of the present invention.

With reference to figure 1, the display control device comprises a controller 101, a storage unit 102, a horizontal sync signal input part 103, a vertical sync signal input part 104, a horizontal sync signal pulse generation unit 105, a vertical sync signal pulse generation unit 106, a reference frequency signal generation unit 107, a horizontal sync signal frequency detection unit 108, a vertical sync signal frequency detection unit 109, a horizontal sync signal presence/absence judgment unit 110, a vertical sync signal presence/absence judgment unit 111, a state determination unit 112, and an interruption generation unit 113. Among these constituents, the horizontal sync signal pulse generation unit 105, the vertical sync signal pulse generation unit 106, the reference frequency signal generation unit 107, the horizontal sync signal frequency detection unit 108, the vertical sync signal frequency detection unit 109, the horizontal sync signal presence/absence judgment unit 110, the vertical sync signal presence/absence judgment unit 111, the state determination unit 112, and the interruption generation unit 113 constitute a state judgment block 114.

By using, for the state judgment block 114, a clock which is different from that for the circuits surrounding the controller 101, the state judgment block 114 can be operated even when the controller 101 is in its halting state.

Further, it is assumed that the controller 101 holds a command for halting the processing of the controller until a hardware interruption is transferred to the controller (hereinafter referred to as a HALT command). Further, the controller 101 controls input/output of data between the storage unit 102 and the controller 101.

Hereinafter, the operation of the display control device constituted as described above will be described.

Initially, the reference frequency signal generation unit 107 generates a reference frequency signal 201 to be a reference for frequency measurement of a horizontal/vertical sync signal. Further, a horizontal/vertical sync signal frequency comparison value write data 218 is supplied from the controller 101 to the storage unit 102, whereby a horizontal sync signal frequency comparison value 202 to be a reference for presence/absence judgment of a horizontal sync signal and a vertical sync signal frequency comparison value 203 to be a reference for presence/absence judgment of a vertical sync signal are previously input to the storage unit 102.

The horizontal sync signal pulse generation unit 105 generates a horizontal sync signal pulse 205 according to a horizontal sync signal 204 supplied from the horizontal sync signal input part 103. Then, the horizontal sync signal pulse 205 is counted by the horizontal sync signal frequency detection unit 108 for one period of the reference frequency signal 201, thereby detecting a frequency 206 of the horizontal sync signal.

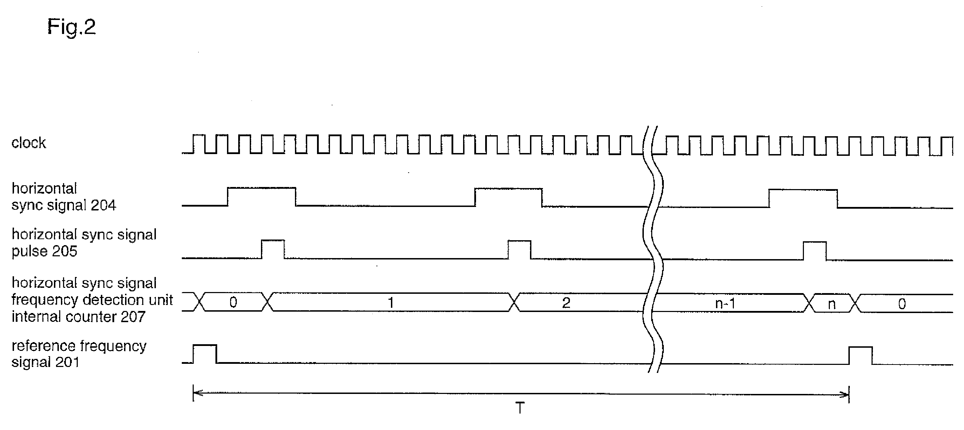

Figure 2 is a timing chart illustrating variations in the reference frequency signal 201, the horizontal sync signal 204, and the horizontal sync signal pulse 205 in the display control device according to the first embodiment of the present invention.

As shown in figure 2, the horizontal sync signal pulse 205 that is a pulse signal synchronized with the clock is taken out of the horizontal sync signal 204 inputted to the horizontal sync input part 103, and the horizontal sync signal pulse 205 is counted by an internal counter 207 of the horizontal sync signal frequency detection unit 108 for one period T of the reference frequency signal 201, whereby the frequency 206 of the horizontal sync signal can be detected. Then, the horizontal sync signal presence/absence judgment unit 110 compares the horizontal sync signal frequency comparison value 202 from the storage unit 102 with the detected frequency 206 of the horizontal sync signal, thereby judging presence/absence of the horizontal sync signal.

Similarly, the vertical sync signal pulse generation unit 106 generates a vertical sync signal pulse 209 according to the vertical sync signal 208 inputted to the vertical sync signal input part 104, and the vertical sync signal pulse 209 is counted by an inner counter 211 of the vertical sync signal frequency detection unit 109 for one period of the reference frequency signal 201, thereby detecting the frequency 210 of the vertical sync signal.

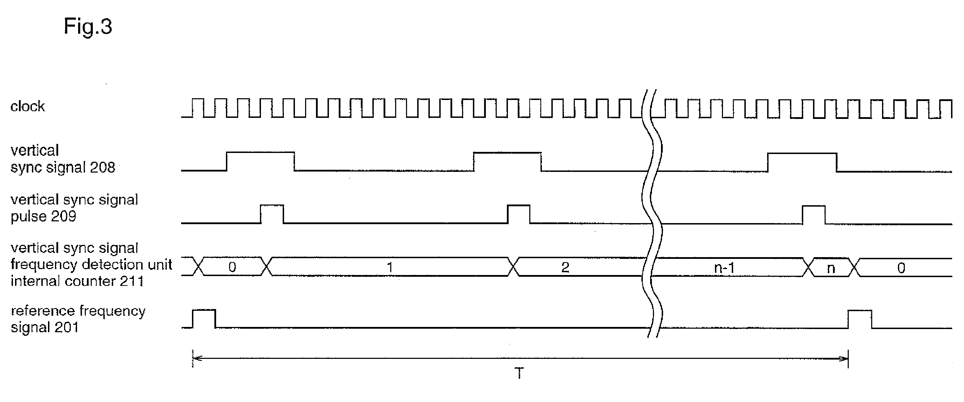

Figure 3 is a timing chart illustrating variations in the reference frequency signal 201, the vertical sync signal 208, and the vertical sync signal pulse 209 in the display control device according to the first embodiment of the present invention.

As shown in figure 3, the vertical sync signal pulse 209 as a pulse signal synchronized with a clock is taken out of the vertical sync signal 208 inputted to the vertical sync input part 104, and the vertical sync signal pulse 209 is counted by an internal counter 211 of the vertical sync signal frequency detection unit 109 for one period T of the reference frequency signal 201, whereby the frequency 210 of the vertical sync signal can be detected. Then, the vertical sync signal presence/absence judgment unit 111 compares the vertical sync signal frequency comparison value 203 from the storage unit 102 with the detected frequency 210 of the vertical sync signal, thereby judging presence/absence of the vertical sync signal.

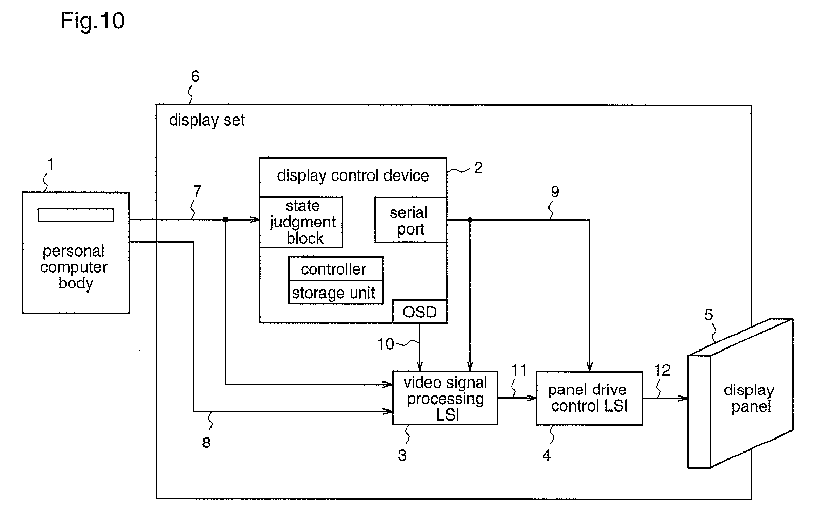

The state determination unit 112 determines the current state 214 from the four states shown in figure 11 on the basis of the judgment result 212 from the horizontal sync signal presence/absence judgment unit 110 and the judgment result 213 from the vertical sync signal presence/absence judgment unit 111, and transmits the current state 214 to an external display power supply management device to perform power supply management for the display, and simultaneously, writes the current state 214 over the state stored in the storage unit 102. The external display power supply management device corresponds to a panel drive control LSI 4 shown in figure 10 which will be described later. As shown in figure 11, the state 214 is "On" when the horizontal sync signal 204 is "present" and the vertical sync signal 208 is "present", the state 214 is "Stand-by" when the horizontal sync signal 204 is "absent" and the vertical sync signal 208 is "present", the state 214 is "Suspend" when the horizontal sync signal 204 is "present" and the vertical sync signal 208 is "absent", and the state 214 is "Off" when the horizontal sync signal 204 is "absent" and the vertical sync signal 208 is "absent".

When the state 214 changes, a state transit signal 217 is transmitted from the state determination unit 112 to the interruption generation unit 113, and the interruption generation unit 113 generates an interruption signal 215. The interruption signal 215 is outputted from the interruption generation unit 113 to the controller 101.

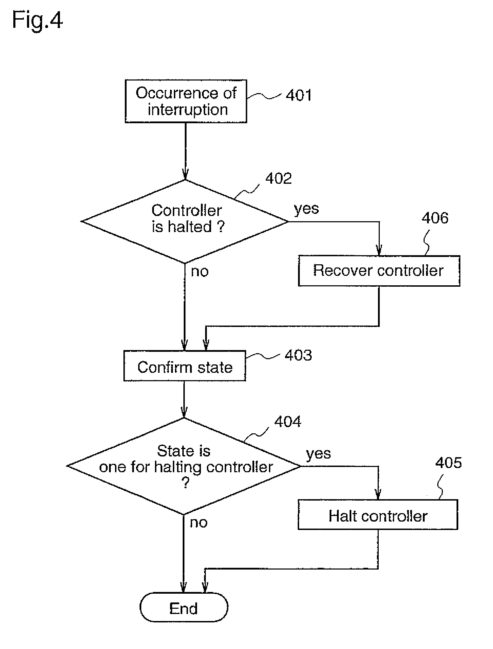

Figure 4 is a flowchart for explaining the operation of the controller 101 when the interruption signal 215 is generated, in the display control device according to the first embodiment.

With reference to figure 4, when an interruption signal 215 is generated (step 401), if the controller 101 is in the normal operation state ("No" in step 204), the controller 101 calls state readout data 216 from the storage unit 102 and checks it (step 403), and executes a HALT command when the state readout data 216 is one that sets the controller 101 into the low power consumption mode ("Yes" in step 404), thereby to halt the controller 101 (step 405). Thus, not only the display power supply but also the controller 101 for controlling the display set can be set into the low power consumption mode in accordance with the state.

When the interruption signal 215 is generated with the change of the state 214 (step 401), if the controller 101 is in the halting state due to the HALT command ("Yes" in step 402), the controller 101 is recovered by the interruption signal 215 (step 406). Thereafter, the controller 101 calls the state readout data 216 from the storage unit 102 and checks it (step 403), and controls the controller 101 according to the state readout data 216 (step 404), whereby the controller 101 for controlling the display set can be returned to the normal mode from the low power compensation mode.

The horizontal sync signal frequency comparison value 202 and the vertical sync signal frequency comparison value 203 may be fixed values.

As described above, according to the first embodiment, the display control device is provided with the controller 101, and the state determination unit 112 for determining the power supply management state of the display on the basis of the combination of presence/absence of the horizontal sync signal and the vertical sync signal, and the controller 101 is operated when the state determination unit 112 judges that the display power supply management state has changed. Therefore, the state of the display can be determined to perform power supply management for the display without using the controller, and simultaneously, the operation mode of the controller can be easily changed according to the state, thereby realizing a further reduction in power consumption as the whole display set.

### (Embodiment 2)

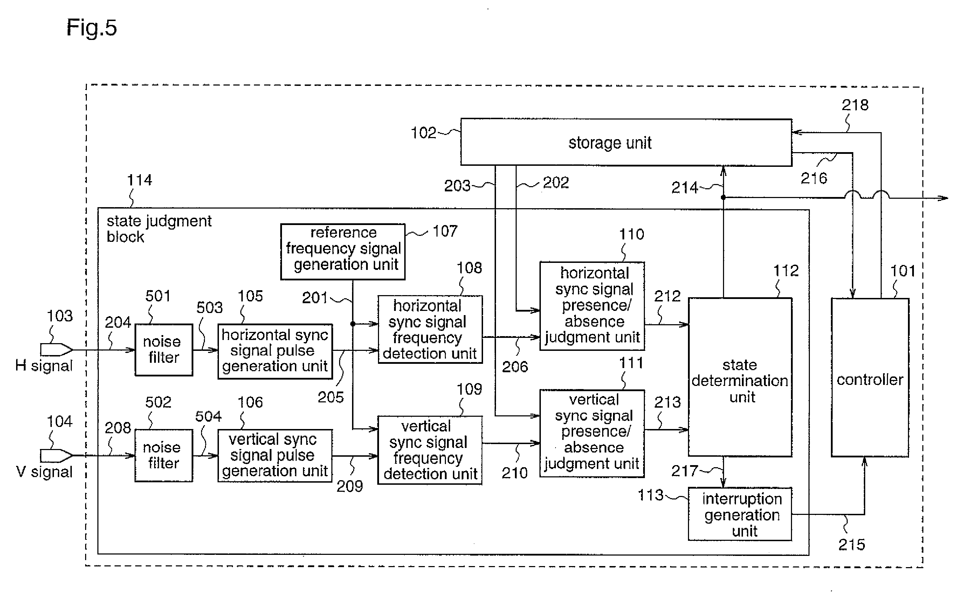

Figure 5 is a block diagram illustrating the construction of a display control device according to a second embodiment of the present invention, wherein a noise filter 501 is added between the horizontal sync signal input part 103 and the horizontal sync signal pulse generation unit 105 of the display control device shown in figure 1, and a noise filter 502 is added between the vertical sync signal input part 104 and the vertical sync signal pulse generation unit 106. The constituents and operations relating to the elements other than the noise filters 501 and 502 are identical to those of the first embodiment, and therefore, repeated description is not necessary.

In figure 5, a horizontal sync signal 204 supplied from the horizontal sync signal input part is input to the noise filter 501, wherein noise in the horizontal sync signal 204 is removed, and the horizontal sync signal pulse generation unit 105 generates a horizontal sync signal pulse 205 from the noise-removed horizontal sync signal 503. Then, the horizontal sync signal pulse 205 is counted for one period of the reference frequency signal 201 by the horizontal sync signal frequency detection unit 108, thereby detecting a frequency 206 of the horizontal sync signal.

Further, a vertical sync signal 208 supplied from the vertical sync signal input part 104 is input to the noise filter 502, wherein noise in the vertical sync signal 208 is removed, and the vertical sync signal pulse generation unit 106 generates a vertical sync signal pulse 209 from the noise-removed vertical sync signal 504. Then, the vertical sync signal pulse 209 is counted for one period of the reference frequency signal 201 by the vertical sync signal frequency detection unit 109, thereby detecting a frequency 210 of the vertical sync signal.

As described above, according to the second embodiment, the display control device which performs power supply management for the display is provided with the noise filter 501 for removing noise in the horizontal sync signal 204, and the noise filter 502 for removing noise in the vertical sync signal 208. Therefore, noises in the horizontal sync signal 204 and the vertical sync signal 208 are removed, and thereby more accurate frequencies 206 and 210 of the horizontal sync signal and the vertical sync signal can be detected.

### (Embodiment 3)

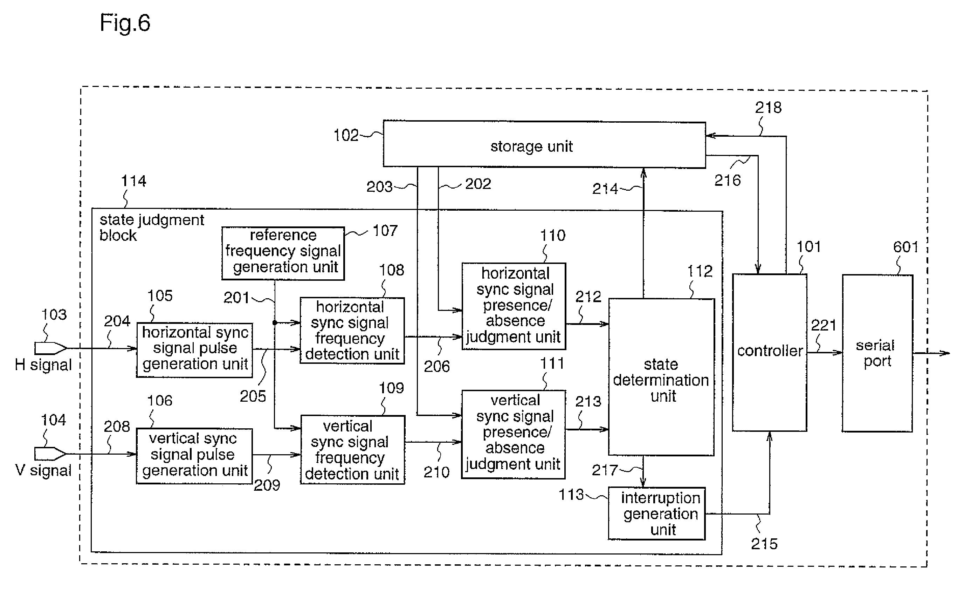

Figure 6 is a block diagram illustrating the construction of a display control device according to a third embodiment of the present invention. While in the display control device shown in figure 1 the current state 214 is transferred from the state determination unit 112 directly to the external display power supply management device, in this third embodiment a serial port 601 is added as a communication means for performing communication between the devices. The constituents and operations of the elements other than the serial port 601 are identical to those of the first embodiment, and therefore, repeated description is not necessary.

With reference to figure 6, the state determination unit 112 determines the current state 214 on the basis of the judgment result 212 from the horizontal sync signal presence/absence judgment unit 110 and the judgment result 213 from the vertical sync signal presence/absence judgment unit 111, and the current state 214 is written over the state stored in the storage unit 102. The controller 101 calls the state readout data 216 from the storage unit 102, and transmits a serial port control signal 221 including the state readout data 216 to the serial port 601.

Then, the state readout data 216 is transmitted to the external display power supply management device by utilizing this serial port 601. Thereby, it becomes unnecessary to provide the display control device with a special terminal for transmitting the state readout data 216 to the display power supply management device, resulting in a reduction in the number of terminals.

The communication means for performing communication between the devices is not necessarily the serial port, and any means may be adopted so long as it enables transmission/reception of information between the devices.

As described above, according to the third embodiment, the display control device for performing power supply management for the display is provided with the serial port 601 as a communication means for performing communication between devices, the number of terminals of the display control device can be reduced.

### (Embodiment 4)

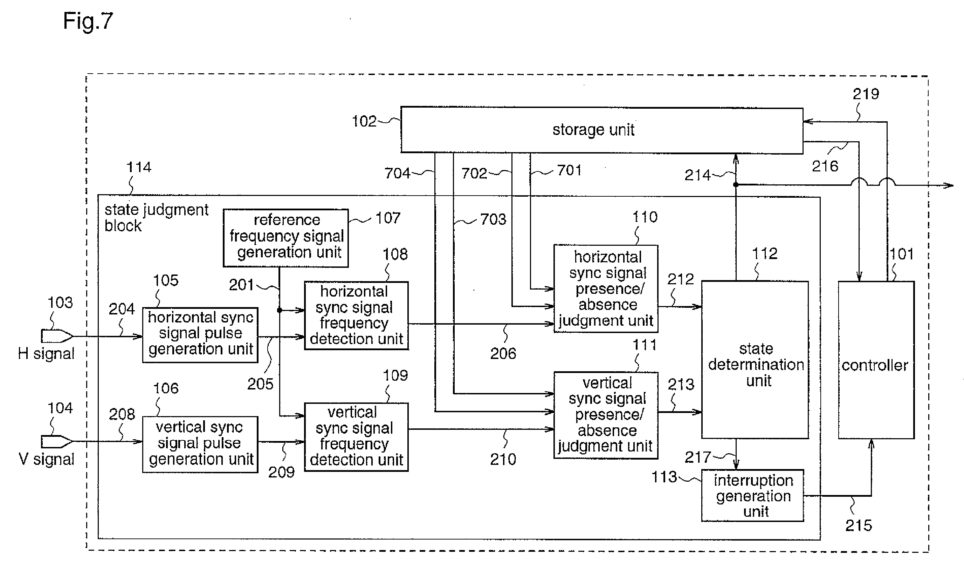

Figure 7 is a block diagram illustrating the construction of a display control device according to a fourth embodiment of the present invention, wherein a horizontal/vertical sync signal frequency higher-order/lower-order comparison value write data 219 is supplied from the controller 101 of the display control device shown in figure 1 to the storage unit 102 instead of the horizontal/vertical sync signal frequency comparison value write data 218, and the horizontal sync signal frequency comparison value 202 as a reference for presence/absence judgment of the horizontal sync signal, which is to be previously stored in the storage unit 102, is changed to a horizontal sync signal frequency higher-order comparison value 701 and a horizontal sync signal frequency lower-order comparison value 702, and the vertical sync signal frequency comparison value 203 as a reference for presence/absence judgment of the vertical sync signal is changed to a vertical sync signal frequency higher-order comparison value 703 and a vertical sync signal frequency lower-order comparison value 704. The constructions and operations of the elements other than those relating to the horizontal/vertical sync signal frequency higher-order/lower-order comparison value write data 219, the horizontal sync signal frequency higher-order comparison value 701, the horizontal sync signal frequency lower-order comparison value 702, the vertical sync signal frequency higher-order comparison value 703, and the vertical sync signal frequency lower-order comparison value 704 are identical to those of the first embodiment, and therefore, repeated description is not necessary.

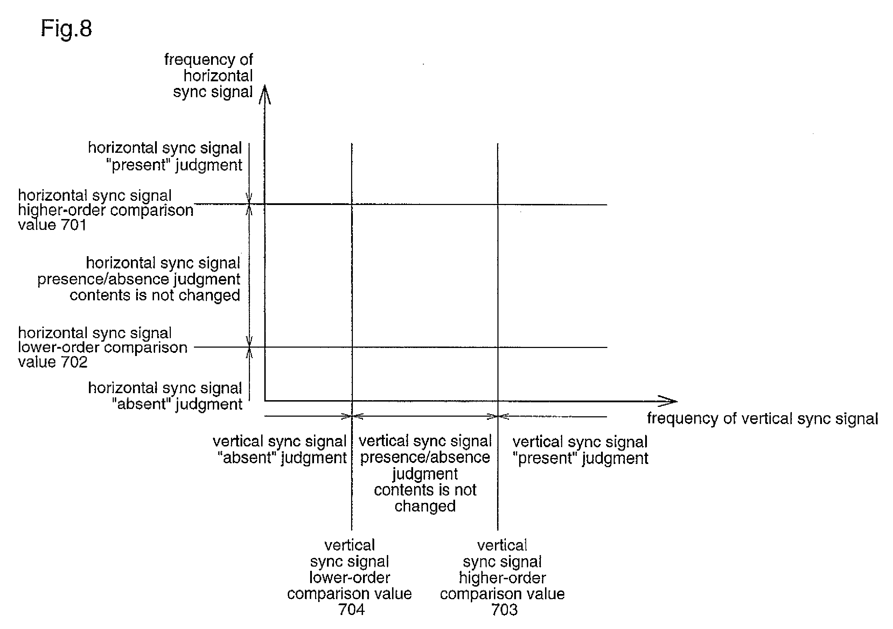

Figure 8 is a diagram for explaining a horizontal/vertical sync signal presence/absence judgment method using the horizontal sync signal frequency higher-order comparison value 701, the horizontal sync signal frequency lower-order comparison value 702, the vertical sync signal frequency higher-order comparison value 703, and the vertical sync signal frequency lower-order comparison value 704.

With reference to figure 8, in the horizontal sync signal presence/absence judgment unit 110, it is judged that the horizontal sync signal 204 is "present" when the frequency 206 of the horizontal sync signal is larger than the horizontal sync signal frequency higher-order comparison value 701, and it is judged that the horizontal sync signal 204 is "absent" when the frequency 206 of the horizontal sync signal is smaller than the horizontal sync signal frequency lower-order comparison value 702, and the contents of the horizontal sync signal presence/absence judgment result 212 obtained by the horizontal sync signal presence/absence judgment unit 110 is not changed when the frequency 206 of the horizontal sync signal is between the horizontal sync signal frequency higher-order comparison value 701 and the horizontal sync signal frequency lower-order comparison value 702.

On the other hand, in the vertical sync signal presence/absence judgment unit 211, it is judged that the vertical sync signal 208 is "present" when the frequency 210 of the vertical sync signal is larger than the vertical sync signal frequency higher-order comparison value 703, and it is judged that the vertical sync signal 208 is "absent" when the frequency 210 of the vertical sync signal is smaller than the vertical sync signal frequency lower-order comparison value 704, and the contents of the vertical sync signal presence/absence judgment result 213 obtained by the vertical sync signal presence/absence judgment unit 211 is not changed when the frequency 210 of the vertical sync signal is between the vertical sync signal frequency higher-order comparison value 703 and the vertical sync signal frequency lower-order comparison value 704.

The horizontal sync signal frequency higher-order comparison value 701, the horizontal sync signal frequency lower-order comparison value 702, the vertical sync signal frequency higher-order comparison value 703, and the vertical sync signal frequency lower-order comparison value 704 may be fixed values.

As described above, according to the fourth embodiment, in the display control device for performing power supply management for the display, since the horizontal sync signal frequency higher-order comparison value 701, the horizontal sync signal frequency lower-order comparison value 702, the vertical sync signal frequency higher-order comparison value 703, and the vertical sync signal frequency lower-order comparison value 704 are used as the reference values for judging the presence/absence of the horizontal/vertical sync signals, it is possible to prevent the state 214 from unnecessarily varying when the frequency 206 or 210 of the horizontal/vertical sync signal is close to the frequency presence/absence judgment reference value of the horizontal/vertical sync signal.

### (Embodiment 5)

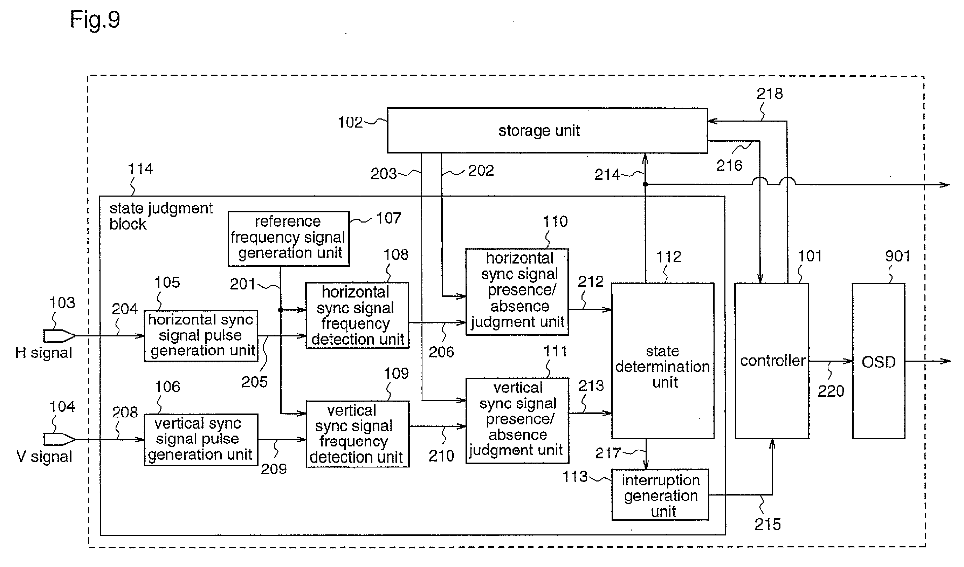

Figure 9 is a block diagram illustrating a display control device according to a fifth embodiment of the present invention, wherein a character display circuit (hereinafter referred to as an OSD (On Screen Display) circuit) 901 for displaying characters of character information on a display is added to the display control device shown in figure 1. The constituents and operations of the elements other than the character display circuit 901 are identical to those of the first embodiment, and therefore, repeated description is not necessary.

In figure 9, when the state 214 changes, a state transition signal 217 is transmitted from the state determination unit 112 to the interruption generation unit 113. Subsequently, an interruption signal 215 is transmitted from the interruption generation unit 113 to the controller 101, and the controller 101 transmits an OSD control signal 220 to the OSD circuit 901. The OSD circuit 901 generates character display information relating to the change of the state 214, and transmits it to an external device. The external device corresponds to a video signal processing LSI 3 which will be described later.

Figure 10 is a simplified schematic diagram of a display set 6 using the display control device of the present invention.

With reference to figure 10, the display set 6 comprises a personal computer body 1, a display control unit 2, a video signal processing LSI 3, a panel control LSI 4, and a display panel 5.

Initially, the display set 6 receives a horizontal/vertical sync signal 7 and a video signal 8 from the personal computer body 1. The display control unit 2 receives the horizontal/vertical sync signal 7 from the personal computer body 1, and outputs a state signal 9 and OSD display information 10.

The video signal processing LSI 3 receives the horizontal/vertical sync signal 7 and the video signal 8 from the personal computer body 1, and further, receives the OSD display information 10 from the display control unit 2, and outputs a video display signal 11. Further, the video signal processing LSI 3 receives the state signal 9 from the display control unit 2, and it is able to perform power control.

The panel drive control LSI 4 receives the video display signal 11 from the video signal processing LSI 3, and outputs image display information 12 to the display panel 4.

Further, also the panel drive control LSI 4 receives the state signal 9 from the display control unit 2, and it is able to perform power control.

The panel display set shown in figure 10 may use not only the display control device according to the fifth embodiment but also the display control devices according to the first to fourth embodiments.

As described above, according to the fifth embodiment, the display control device for performing power supply management for the display is provided with the OSD circuit 901 which displays characters of character information on the display. Therefore, when the state 214 changes, before transition of the display to the low power consumption mode is performed, this transition of the state of the display is output to the screen to visually inform the same.

### APPLICABILITY IN INDUSTRY

A display control device according to the present invention is useful in reducing power consumption of a display set.

## Claims

1. A display control device having a controller, and a power supply management state judgment unit for judging a power supply management state of a display on the basis of a combination of presence/absence of a horizontal sync signal and a vertical sync signal, wherein
the power supply of the display is managed in accordance with a result of the judgment by the power supply management state judgment unit, and the controller is operated when it is judged that the power supply management state of the display is changed.

2. A display control device as defined in Claim 1 further including a communication unit for performing communication between devices.

3. A display control device as defined in Claim 1 further including a character display unit for displaying characters on the display.

4. A display control device comprising:
a storage unit in which a judgment result of a power supply management state of a display is stored;
a controller for controlling input/output of data between the storage unit and the controller;
a horizontal sync signal input unit to which an external horizontal sync signal is input;
a vertical sync signal input unit to which an external vertical sync signal is input;
a horizontal sync signal frequency detection unit for detecting a frequency of the horizontal sync signal;
a vertical sync signal frequency detection unit for detecting a frequency of the vertical sync signal;
a horizontal sync signal presence/absence judgment unit for detecting presence/absence of the horizontal sync signal on the basis of a reference value for judging presence/absence of the horizontal sync signal;
a vertical sync signal presence/absence judgment unit for detecting presence/absence of the vertical sync signal on the basis of a reference value for judging presence/absence of the vertical sync signal;
a power supply management state judgment unit for judging the power supply management state of the display on the basis of a combination of presence/absence of the horizontal sync signal and the vertical sync signal; and
an interruption generation unit for generating an interruption signal to be output to the controller, when the power supply management judgment unit judges that the power supply management state of the display is changed;
wherein the power supply of the display is managed according to the result of the judgment by the power supply management state judgment unit, and the controller is operated on the basis of the interruption signal.

5. A display control device as defined in Claim 4 further including a communication unit for performing communication between devices.

6. A display control device as defined in Claim 4 further including a character display unit for displaying characters on the display.

7. A display control device comprising:
a storage unit in which a judgment result of a power supply management state of a display is stored;
a controller for controlling input/output of data between the storage unit and the controller;
a horizontal sync signal input unit to which an external horizontal sync signal is input;
a vertical sync signal input unit to which an external vertical sync signal is input;
a horizontal sync signal pulse generation unit for generating a pulse of the horizontal sync signal;
a vertical sync signal pulse generation unit for generating a pulse of the vertical sync signal;
a reference frequency signal generation unit for generating a reference frequency signal to be a reference of frequency detection for the horizontal sync signal and the vertical sync signal;
a horizontal sync signal frequency detection unit for detecting a frequency of the horizontal sync signal;
a vertical sync signal frequency detection unit for detecting a frequency of the vertical sync signal;
a horizontal sync signal presence/absence judgment unit for detecting presence/absence of the horizontal sync signal on the basis of a reference value for judging presence/absence of the horizontal sync signal;
a vertical sync signal presence/absence judgment unit for detecting presence/absence of the vertical sync signal on the basis of a reference value for judging presence/absence of the vertical sync signal;
a power supply management state judgment unit for judging the power supply management state of the display on the basis of a combination of presence/absence of the horizontal sync signal and the vertical sync signal; and
an interruption generation unit for generating an interruption signal to be output to the controller when the power supply management judgment unit judges that the display power supply management state has changed;
wherein the power supply of the display is managed according to the result of the judgment by the power supply management state judgment unit, and the controller is operated on the basis of the interruption signal.

8. A display control device as defined in Claim 7 further including a communication unit for performing communication between devices.

9. A display control device as defined in Claim 7 further including a character display unit for displaying characters on the display.

10. A display control device comprising:
a storage unit in which a judgment result of a power supply management state of a display is stored;
a controller for controlling input/output of data between the storage unit and the controller;
a horizontal sync signal input unit to which an external horizontal sync signal is input;
a vertical sync signal input unit to which an external vertical sync signal is input;
a horizontal sync signal noise filter for removing noise in the horizontal sync signal;
a vertical sync signal noise filter for removing noise in the vertical sync signal;
a horizontal sync signal pulse generation unit for generating a pulse of the horizontal sync signal;
a vertical sync signal pulse generation unit for generating a pulse of the vertical sync signal;
a reference frequency signal generation unit for generating a reference frequency signal to be a reference of frequency detection for the horizontal sync signal and the vertical sync signal;
a horizontal sync signal frequency detection unit for detecting a frequency of the horizontal sync signal;
a vertical sync signal frequency detection unit for detecting a frequency of the vertical sync signal;
a horizontal sync signal presence/absence judgment unit for detecting presence/absence of the horizontal sync signal on the basis of a reference value for judging presence/absence of the horizontal sync signal;
a vertical sync signal presence/absence judgment unit for detecting presence/absence of the vertical sync signal on the basis of a reference value for judging presence/absence of the vertical sync signal;
a power supply management state judgment unit for judging the power supply management state of the display on the basis of a combination of presence/absence of the horizontal sync signal and the vertical sync signal; and
an interruption generation unit for generating an interruption signal to be output to the controller when the power supply management judgment unit judges that the display power supply management state has changed;
wherein the power supply of the display is managed according to the result of the judgment by the power supply management state judgment unit, and the controller is operated on the basis of the interruption signal.

11. A display control device as defined in Claim 10 further including a communication unit for performing communication between devices.

12. A display control device as defined in Claim 10 further including a character display unit for displaying characters on the display.

13. A display control device as defined in Claim 4 wherein the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

14. A display control device as defined in Claim 13 further including a communication unit for performing communication between devices.

15. A display control device as defined in Claim 13 further including a character display unit for displaying characters on the display.

16. A display control device as defined in Claim 7 wherein the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

17. A display control device as defined in Claim 16 further including a communication unit for performing communication between devices.

18. A display control device as defined in Claim 16 further including a character display unit for displaying characters on the display.

19. A display control device as defined in Claim 10 wherein the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

20. A display control device as defined in Claim 19 further including a communication unit for performing communication between devices.

21. A display control device as defined in Claim 19 further including a character display unit for displaying characters on the display.

22. A display control device as defined in any of Claims 1, 4, 7, 10, 13, 16 and 19 further including a communication unit for performing communication between devices, and a character display unit for displaying characters on the display.

## Amended claims

### Amended claims under Art. 19.1 PCT

**1.** A display control device comprising:
a storage unit in which a judgment result of a power supply management state of a display is stored;
a controller for controlling input/output of data between the storage unit and the controller;
a horizontal sync signal input unit to which an external horizontal sync signal is input;
a vertical sync signal input unit to which an external vertical sync signal is input;
a horizontal sync signal frequency detection unit for detecting a frequency of the horizontal sync signal;
a vertical sync signal frequency detection unit for detecting a frequency of the vertical sync signal;
a horizontal sync signal presence/absence judgment unit for detecting presence/absence of the horizontal sync signal on the basis of a reference value for judging presence/absence of the horizontal sync signal;
a vertical sync signal presence/absence judgment unit for detecting presence/absence of the vertical sync signal on the basis of a reference value for judging presence/absence of the vertical sync signal;
a power supply management state judgment unit for judging the power supply management state of the display on the basis of a combination of presence/absence of the horizontal sync signal and the vertical sync signal; and
an interruption generation unit for generating an interruption signal to be output to the controller, when the power supply management judgment unit judges that the power supply management state of the display is changed;
wherein the power supply of the display is managed according to the result of the judgment by the power supply management state judgment unit, and the controller is operated on the basis of the interruption signal.

**2.** A display control device as defined in Claim 1 further including a communication unit for performing communication between devices.

**3.** A display control device as defined in Claim 1 further including a character display unit for displaying characters on the display.

**4.** A display control device comprising:
a storage unit in which a judgment result of a power supply management state of a display is stored;
a controller for controlling input/output of data between the storage unit and the controller;
a horizontal sync signal input unit to which an external horizontal sync signal is input;
a vertical sync signal input unit to which an external vertical sync signal is input;
a horizontal sync signal pulse generation unit for generating a pulse of the horizontal sync signal;
a vertical sync signal pulse generation unit for generating a pulse of the vertical sync signal;
a reference frequency signal generation unit for generating a reference frequency signal to be a reference of frequency detection for the horizontal sync signal and the vertical sync signal;
a horizontal sync signal frequency detection unit for detecting a frequency of the horizontal sync signal;
a vertical sync signal frequency detection unit for detecting a frequency of the vertical sync signal;
a horizontal sync signal presence/absence judgment unit for detecting presence/absence of the horizontal sync signal on the basis of a reference value for judging presence/absence of the horizontal sync signal;
a vertical sync signal presence/absence judgment unit for detecting presence/absence of the vertical sync signal on the basis of a reference value for judging presence/absence of the vertical sync signal;
a power supply management state judgment unit for judging the power supply management state of the display on the basis of a combination of presence/absence of the horizontal sync signal and the vertical sync signal; and
an interruption generation unit for generating an interruption signal to be output to the controller when the power supply management judgment unit judges that the display power supply management state has changed;
wherein the power supply of the display is managed according to the result of the judgment by the power supply management state judgment unit, and the controller is operated on the basis of the interruption signal.

**5.** A display control device as defined in Claim 4 further including a communication unit for performing communication between devices.

**6.** A display control device as defined in Claim 4 further including a character display unit for displaying characters on the display.

**7.** A display control device comprising:
a storage unit in which a judgment result of a power supply management state of a display is stored;
a controller for controlling input/output of data between the storage unit and the controller;
a horizontal sync signal input unit to which an external horizontal sync signal is input;
a vertical sync signal input unit to which an external vertical sync signal is input;
a horizontal sync signal noise filter for removing noise in the horizontal sync signal;
a vertical sync signal noise filter for removing noise in the vertical sync signal;
a horizontal sync signal pulse generation unit for generating a pulse of the horizontal sync signal;
a vertical sync signal pulse generation unit for generating a pulse of the vertical sync signal;
a reference frequency signal generation unit for generating a reference frequency signal to be a reference of frequency detection for the horizontal sync signal and the vertical sync signal;
a horizontal sync signal frequency detection unit for detecting a frequency of the horizontal sync signal;
a vertical sync signal frequency detection unit for detecting a frequency of the vertical sync signal;
a horizontal sync signal presence/absence judgment unit for detecting presence/absence of the horizontal sync signal on the basis of a reference value for judging presence/absence of the horizontal sync signal;
a vertical sync signal presence/absence judgment unit for detecting presence/absence of the vertical sync signal on the basis of a reference value for judging presence/absence of the vertical sync signal;
a power supply management state judgment unit for judging the power supply management state of the display on the basis of a combination of presence/absence of the horizontal sync signal and the vertical sync signal; and
an interruption generation unit for generating an interruption signal to be output to the controller when the power supply management judgment unit judges that the display power supply management state has changed;
wherein the power supply of the display is managed according to the result of the judgment by the power supply management state judgment unit, and the controller is operated on the basis of the interruption signal.

**8.** A display control device as defined in Claim 7 further including a communication unit for performing communication between devices.

**9.** A display control device as defined in Claim 7 further including a character display unit for displaying characters on the display.

**10.** A display control device as defined in Claim 1 wherein the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

**11.** A display control device as defined in Claim 10 further including a communication unit for performing communication between devices.

**12.** A display control device as defined in Claim 10 further including a character display unit for displaying characters on the display.

**13.** A display control device as defined in Claim 4 wherein the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

**14.** A display control device as defined in Claim 13 further including a communication unit for performing communication between devices.

**15.** A display control device as defined in Claim 13 further including a character display unit for displaying characters on the display.

**16.** A display control device as defined in Claim 7 wherein the reference value for judging presence/absence of the horizontal signal comprises two reference values, i.e., higher-order and lower-order reference values, and the reference value for judging presence/absence of the horizontal signal comprises two reference values, i.e., higher-order and lower-order reference values.

**17.** A display control device as defined in Claim 16 further including a communication unit for performing communication between devices.

**18.** A display control device as defined in Claim 16 further including a character display unit for displaying characters on the display.

**19.** A display control device as defined in any of Claims 1, 4, 7, 10, 134 and 16 further including a communication unit for performing communication between devices, and a character display unit for displaying characters on the display.
